Europäisches Patentamt

European Patent Office

Office européen des brevets

(11) Veröffentlichungsnummer: **0 284 727 B1**

# EUROPÄISCHE PATENTSCHRIFT

(45) Veröffentlichungstag der Patentschrift: **24.06.92**

(21) Anmeldenummer: **88101455.9**

(22) Anmeldetag: **02.02.88**

(51) Int. Cl.5: **F01M 1/10**, F16N 19/00

(54) **Ölbehälter.**

(30) Priorität: **01.04.87 DE 3711000**

(43) Veröffentlichungstag der Anmeldung:
**05.10.88 Patentblatt 88/40**

(45) Bekanntmachung des Hinweises auf die
Patenterteilung:
**24.06.92 Patentblatt 92/26**

(84) Benannte Vertragsstaaten:
**DE ES FR GB IT SE**

(56) Entgegenhaltungen:
**EP-A- 0 043 299**
**DE-A- 1 903 295**
**DE-A- 2 005 594**
**US-A- 2 432 130**
**US-A- 2 983 331**

(73) Patentinhaber: **Dr.Ing.h.c. F. Porsche Aktiengesellschaft**
**Porschestrasse 42**
**W-7000 Stuttgart 40(DE)**

(72) Erfinder: **Eisenhauer, Egon, Dipl.-Ing.(FH)**
**Buchenstrasse 6/1**
**W-7258 Heimsheim(DE)**
Erfinder: **Jansen, Bernhard**
**Wettertalstrasse 5**
**W-7257 Ditzingen(DE)**

## Beschreibung

Die Erfindung bezieht sich auf einen Ölbehälter nach dem Oberbegriff des Anspruchs 1.

Bei einer Trockensumpfschmierung für einen Motor eines Kraftfahrzeugs ist zwangsläufig die Ölansaugpumpe für den Ölkreislauf zum Ölbehälter überdimensioniert. Es gelangt somit ein hoher Luftanteil in den Ölrücklauf, was dazu führt, daß das Öl nicht mehr gleichmäßig fließt und ein sogenanntes Plätschern beim Austreten des mit Luftanteilen angereicherten Ölstromes aus der Rücklaufleitung in den Behälter entsteht.

Aus der DE-A 19 03 295 ist ein Öl-Vorratsbehälter in einer Brennkraftmaschine bekannt, in den eine zylindrische nach unten offene Glocke eingesetzt ist, in die eine Öl-Rücklaufleitung einmündet. Die Glocke taucht mit ihrem unteren Rohrende in das Medium ein und ist mit ihrem oberen Rohrende beabstandet zum Behälter angeordnet und mit einer zentralen Öffnung versehen.

Die Aufgabe der Erfindung besteht darin, einen Ölbehälter mit einer Anordnung einer Ölrücklaufleitung zu schaffen, die einen geräuscharmen Einlauf des Öls in den Behälter gewährleistet.

Durch die Erfindung wird erreicht, daß der Ölstrom beim Eintreten in das Tauchrohr möglichst an dessen Wandung solange anliegend geführt wird, bis es in das Medium des Ölbehälters eingeflossen ist. Dies bewirkt eine Absenkung des Geräusches, wobei das Tauchrohr an sich schon ge-räuschmindernd wirkt. Eine unterstützende Maß-nahme zur Geräuschreduzierung ist auch, daß das Tauchrohr zum Behälter elastisch gelagert ist und darüber hinaus doppelwandig ausgeführt sein kann. Der verbleibende Raum zwischen den Wandungen des Tauchrohres kann entweder mit Stahlwolle oder einem gleichwirkenden Mittel ausgefüllt sein oder es verbleibt ein Hohlraum.

Bei der Lagerung des Tauchrohres über die elastischen Elemente kann die Rücklaufleitung getrennt ausgeführt und die Teile über einen elastischen Schlauch miteinander verbunden sein, so daß das Tauchrohr zum Ölbehälter nahezu schwingungsentkoppelt gehalten ist. Eine solche Ausbildung der Leitung ist auch bei einem fest im Ölbehälter angeordneten Tauchrohr möglich.

Ein Ausführungsbeispiel der Erfindung ist in der Zeichnung dargestellt und wird im folgenden näher beschrieben.

Es zeigen:

Fig. 1     einen Ölbehälter mit einem Tauchrohr teilweise im Schnitt,

Fig. 2     einen Schnitt durch das Tauchrohr gemäß der Linie II-II der Fig. 1,

Fig. 3     eine Ansicht auf den Ölbehälter in Pfeilrichtung Z gesehen und

Fig. 4     eine weitere Ausführungsform eines elastisch gelagerten Tauchrohres im Ölbehälter mit einer abgekoppelten Öl-Rücklaufleitung.

Bei einer Trockensumpfschmierung für eine Brennkraftmaschine in einem Kraftfahrzeug weist ein Ölbehälter 1 ein bestimmtes Ölniveau 2 auf, über dem eine Rücklaufleitung 3 einmündet. Über eine im Öl angeordnete Absaugleitung 4, deren Öffnung 5 nahe dem Behälterboden 6 angeordnet ist, wird dem Antriebsaggregat Öl zugeführt.

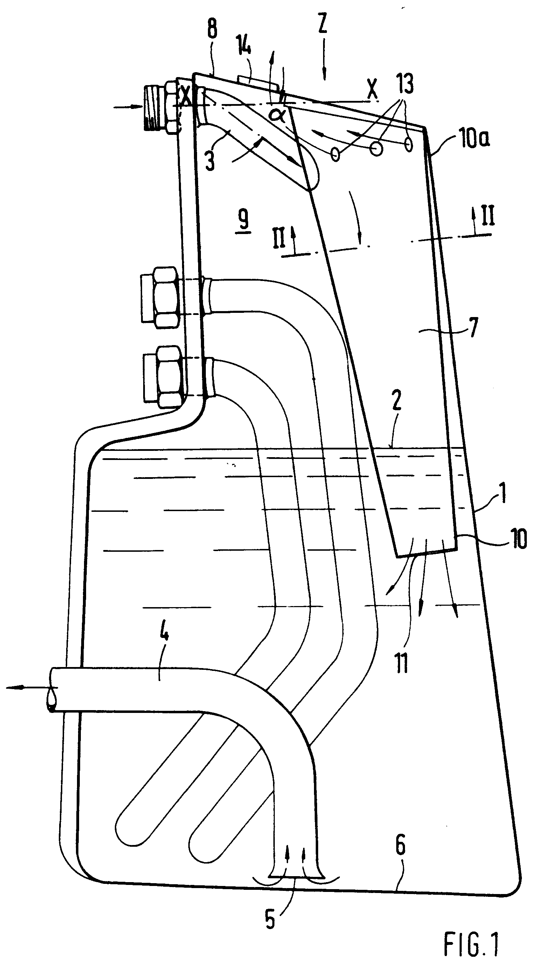

Die Rücklaufleitung 3 mündet in ein Tauchrohr 7 ein, das mit einer oberen Behälterwand 8 verbunden und über diese stirnseitig abgeschlossen ist. Es erstreckt sich etwa vertikal in den Behälterraum 9 und taucht mit seinem unteren Ende 10 in das Medium ein, so daß eine Öffnung 11 des Tauchrohres unterhalb des Ölniveaus 2 liegt. Das Tauchrohr 7 weist eine zylindrische Form (nicht gezeigt) oder vorzugsweise eine Trichterform auf (Fig. 1).

Das Tauchrohr 7 ist oberhalb einer Einmündung 12 der Rücklaufleitung 3 mit mehreren Entlüftungsöffnungen 13 versehen, die eine direkte Verbindung zum Behälterraum 9 herstellen. Zu diesem ist benachbart der Entlüftungsöffnungen 13 eine Luftauslaßöffnung 14 vorgesehen, über welche die abströmenden Luftanteile des Öls abgeführt werden, wie die Pfeile näher zeigen.

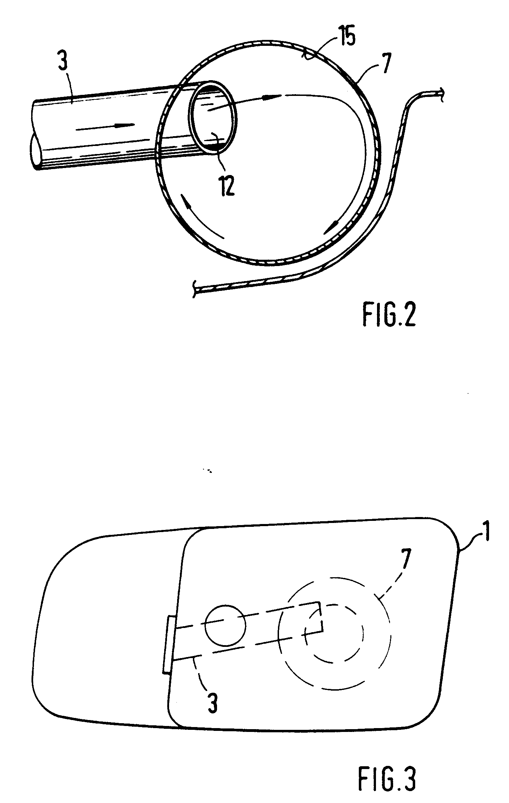

Die Rücklaufleitung 3 ist vorzugsweise unter einem Winkel α zu einer horizontalen Ebene X-X dargestellt, so daß eine schräge Ausrichtung zum Ölniveau hergestellt wird. Wie in Fig. 2 gezeigt ist, verläuft die Leitung 3 annähernd tangential zur Rohrinnenwand 15, so daß ein Ölstrom sich an die Innenwand 15 anlegt und spiralförmig im Tauchrohr bis zum Einfließen in das vorhandene Medium des Behälters 1 unterhalb des Ölniveaus 2 abläuft.

Nach der Ausführung gemäß Fig. 1 ist das Tauchrohr 7 trichterförmig ausgebildet und mit seiner kleinen Öffnung 11 ins Medium eintauchend ausgeführt.

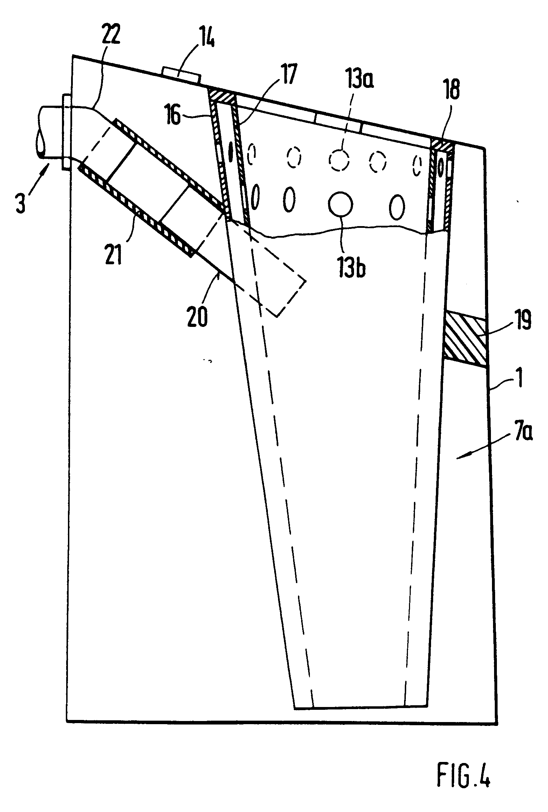

Das Tauchrohr 7a gemäß Fig. 4, weist eine doppelte Wandung 16 u. 17 auf, die zwischen sich entweder einen Hohlraum aufweisen, der aber auch mit Stahlwolle oder einem gleichwirkenden Mittel ausgefüllt sein kann. Die Wandungen 16 und 17 weisen jeweils Entlüftungslöcher 13a, 13b auf, die höhenversetzt zueinander angeordnet sind.

Eine Befestigung des Tauchrohres 7; 7a am Behälter 1 kann über elastische Elemente 18, 19 erfolgen, die körperschallisolierend wirken.

Die Rücklaufleitung 3 kann zwischen dem mit dem Tauchrohr 7; 7a verbundenen ersten Leitungsteil 20 und dem mit dem Behälter 1 verbundenen zweiten Leitungsteil 22 über einen elastischen Gummischlauch 21 verbunden sein.

## Patentansprüche

1. Ölbehälter (1) in einer Brennkraftmaschine mit Trockensumpfschmierung, der eine Öl-Rücklaufleitung (3) und eine mit einer Pumpe des Kreislaufs verbundene Öl-Absaugleitung (4) aufweist und die Rücklaufleitung (3) in ein Tauchrohr (7; 7a) des Behälters (1) einmündet, das mit seinem eine Öffnung (11) aufweisenden unteren Rohrende (10) in das Medium eintaucht, **dadurch gekennzeichnet,** daß das abgekehrte obere Rohrende (10a) abgeschlossen ist und daß oberhalb der Einmündung (12) der Rücklaufleitung (3) in das Tauchrohr (7; 7a) Entlüftungsöffnungen (13; 13a; 13b) angeordnet sind, die benachbart zu einer Luftauslaßöffnung (14) im Ölbehälter (1) angeordnet sind.

2. Ölbehälter nach Anspruch 1, dadurch gekennzeichnet, daß die Rücklaufleitung (3) unter einem Winkel (α) zu einer horizontalen Ebene (X-X) geneigt, in das etwa vertikal angeordnete Tauchrohr (7; 7a) einmündet, wobei es annähernd tangential zur Rohrinnenwand (15) ausgerichtet ist.

3. Ölbehälter nach den Ansprüchen 1 oder 2, dadurch gekennzeichnet, daß das Tauchrohr (7; 7a) trichterförmig ausgebildet ist und mit seiner kleinen Öffnung (11) dem Medium zugerichtet ist.

4. Ölbehälter nach einem oder mehreren der vorhergehenden Ansprüche, dadurch gekennzeichnet, daß das Tauchrohr (7) mit seinem oberen Rohrende (10a) an einer oberen Behälterwand (8) befestigt und von dieser verschlossen ist.

5. Ölbehälter nach Anspruch 1, dadurch gekennzeichnet, daß das Tauchrohr (7a) doppelwandig ausgeführt und zwischen den Wandungen (16 und 17) Stahlwolle angeordnet ist.

6. Ölbehälter nach Anspruch 5, dadurch gekennzeichnet, daß die Entlüftungslöcher (13a) in der Außenwandung (16) höhenversetzt zu den Entlüftungslöchern (13b) in der Innenwandung (17) angeordnet sind.

7. Ölbehälter nach einem oder mehreren der vorhergehenden Ansprüche, dadurch gekennzeichnet, daß das Tauchrohr (7; 7a) obenseitig abgeschlossen ist und zu den Wandungen des Ölbehälters (1) über mehrere elastische Elemente (18, 19) abgestützt wird und daß die Rücklaufleitung (3) einen elastischen Verbindungsschlauch (21) umfaßt, der ein mit dem Tauchrohr (7; 7a) verbundenes erstes rohrfestes Leitungsteil (20) mit einem zweiten behälterfesten Leitungsteil (22) verbindet.

**Claims**

1. An oil reservoir (1) in an internal combustion engine, with dry sump lubrication, comprising an oil return line (3) and an oil suction line (4) connected to a pump of the circuit, and the oil return line (3) opening into an immersion tube (7; 7a) of the reservoir (1), which [immersion tube] dips into the medium with its lower end (10) provided with an opening (11), characterized in that the remote upper tube end (10a) is closed off, and vent openings (13; 13a; 13b) which are arranged adjacent to an air-outlet opening (14) in the oil reservoir (1) are arranged above the opening (12) of the return line (3) into the immersion tube (7; 7a).

2. An oil reservoir according to Claim 1, characterized in that the return line (3) [is] inclined at an angle (α) to a horizontal plane (X-X) into [which] the immersion tube (7; 7a) arranged substantially vertically opens, the immersion tube (7; 7a) being orientated substantially tangentially to the inner wall (15) of the tube.

3. An oil reservoir according to Claim 1 or 2, characterized in that the immersion tube (7; 7a) is constructed in the shape of a funnel and faces the medium with its small opening (11).

4. An oil reservoir according to one or more of the preceding Claims, characterized in that the immersion tube (7) is secured by its upper end (10a) to an upper wall (8) of the container and is closed thereby.

5. An oil reservoir according to Claim 1, characterized in that the immersion tube (7a) is made double-walled and steel wool is arranged between the walls (16 and 17).

6. An oil reservoir according to Claim 5, characterized in that the vent holes (13a) in the outer wall (16) are arranged vertically offset with respect to the vent holes (13b) in the inner wall (17).

7. An oil reservoir according to one or more of the preceding Claims, characterized in that the immersion tube (7; 7a) is closed at the top and is supported by way of a plurality of resilient members (18, 19) relative to the walls of the oil reservoir (1), and the return line (3) comprises a resilient connexion hose (21) connecting a first part (20) of the line - connected to the immersion tube (7; 7a) and rigid with the tube - to a second part (22) of the line rigid with the reservoir.

**Revendications**

1. Réservoir à huile (1) dans un moteur à combustion interne à graissage à carter sec, qui comporte une conduite de retour d'huile (3) et une conduite d'aspiration d'huile (4) reliée à une pompe du circuit, la conduite de retour d'huile (3) débouchant dans un tube plongeur (7 ; 7a) du réservoir (1) qui plonge dans le fluide par son extrémité tubulaire inférieure (10) comportant une ouverture (11), caractérisé en ce que l'extrémité tubulaire supérieure opposée (10a) est fermée et en ce que des ouvertures de désaérage (13 ; 13a ; 13b) sont disposées au-dessus de l'embouchure (12) de la conduite de retour (3) dans le tube plongeur (7 ; 7a), ouvertures qui sont placées au voisinage d'une ouverture de sortie d'air (14) dans le réservoir à huile (1).

2. Réservoir à huile selon la revendication 1, caractérisé en ce que la conduite de retour (3) est inclinée d'un angle (α) par rapport à un plan horizontal (X-X), débouche dans le tube plongeur (7 ; 7a) disposé sensiblement verticalement, celui-ci étant orienté sensiblement tangentiellement à la paroi intérieure (15) du tube.

3. Réservoir à huile selon la revendication 1 ou 2, caractérisé en ce que le tube plongeur (7 ; 7a) est conformé en entonnoir et est dirigé vers le fluide par sa petite ouverture (11).

4. Réservoir à huile selon une ou plusieurs des revendications précédentes, caractérisé en ce que le tube plongeur (7) est fixé par son extrémité tubulaire supérieure (10a) à un paroi supérieure (8) du réservoir et est fermé par celle-ci.

5. Réservoir à huile selon la revendication 1, caractérisé en ce que le tube plongeur (7a) est à double paroi, et en ce que de la paille de fer est placée entre les parois (16 et 17).

6. Réservoir à huile selon la revendication 5, caractérisé en ce que les trous de désaérage (13a) de la paroi extérieure (16) sont décalés en hauteur par rapport aux trous de désaérage (13b) de la paroi intérieure (17).

7. Réservoir à huile selon une ou plusieurs des revendications précédentes, caractérisé en ce que le tube plongeur (7 ; 7a) est fermé supérieurement et s'appuie sur les parois du réservoir à huile (1) par l'intermédiaire de plusieurs éléments élastiques (18, 19), et en ce que la conduite de retour (3) comprend un tuyau de liaison élastique (21) qui relie une première partie de conduite (20) fixée au tube, reliée au tube plongeur (7 ; 7a), à une seconde partie de conduite (22) fixée au réservoir.

FIG.1

FIG.2

FIG.3

FIG.4